# EUROPEAN PATENT APPLICATION

(11) **EP 2 022 382 A2**
(43) Date of publication of application: **11.02.2009**
(21) Application number: 08151173.5
(22) Date of filing: 07.02.2008
(51) Int. Cl.: A47J 39/00

(54) **Unit for the distribution of meals in isothermal containers**

(30) Priority: 06.08.2007 IT TO20070104 U
(71) Applicant: Monetti S.p.a., 12035 Racconigi (CN) (IT)
(72) Inventor: Monetti, Giovanni, 12035, Racconigi (Cuneo) (IT)
(74) Representative: Buzzi, Franco

(57) **Abstract**

A unit for distribution of thermally regulated meals, which comprises isothermal containers (3) formed by a base (4) and by a thermally insulating lid (5), in which the base presents an identification of the thermal characteristics of the foodstuffs introduced into the isothermal containers (4).

## Description

The present invention relates in general to units for the distribution of meals, particularly but not exclusively in the sector of the collective catering, of the type comprising a trolley provided with a set of shelves set on top of one another, which define a plurality of supports, a plurality of trays available on said shelves set on top of one another, and isothermal containers formed each by a base and by a lid that can be set on top of the base.

Units for the distribution of meals of the above type are currently produced and marketed by the present applicant. They represent the ideal solution for the widest possible range of requirements for packaging and distribution of individual complete meals. Units for distribution of meals of the type described above are particularly advantageous in all those cases in which it is necessary to manage individual meals in places that are located at a distance from the centres for cooking food, such as, for example, in the case of hospitals, hotels, congress halls, worksites, military camps, factories, etc.

In all the above applications, the thermally insulating structure of the containers enables thermal insulation from the outer environment of the foods contained therein. However, when the time that elapses between cooking of the foods and delivery of the container to the consumer is long, there is the risk that the thermal conditions of the food are altered by the inevitable thermal exchange with the outer environment, thus jeopardizing the fragrance and organoleptic characteristics of the food. This problem is particularly critical in the case of collective distribution of the containers for food at a pre-set time (for example, in a hospital setting). In this case, in order to preserve within reasonable limits the thermal characteristics of the hot food, it is necessary to optimize and co-ordinate with the maximum timeliness and punctuality the step of cooking of the foods and the step of distribution of the containers, with evident complexity from the organization standpoint.

The present applicant is the holder of the European patent No. EP 0 668 042, which describes a unit for the distribution of hot meals of the type described above. Said solution envisages isothermal containers, each of which comprises a system for thermal regulation incorporated in the base of the container and including at least one electrical heating resistor connected to electrical-connection terminal means that are accessible from the outside of the container. The transportation device of the unit described in the European patent in question comprises, for each of the isothermal containers, a support of a shape complementary to that of the container, in which a contact board co-operates with the electrical-connection terminal means when the isothermal container is housed in the support, and means for connecting the contact board to an electrical-supply source. The electrical resistor provided on each isothermal container enables the temperature of the hot foods to be kept constant in such a way as to be able to deliver them to the consumer at the ideal temperature for their consumption.

The solution described above solves the problem of the control of the temperature for hot meals.

In the framework of the technique in question there remains, however, the need to provide meal-distribution units that will be suited to being used indistinctly for hot and cold meals and that will enable a logistics that facilitates the operations of packaging and sorting of the foods.

The purpose of the present invention is to meet the aforementioned needs, and in particular to provide a unit for the distribution of meals in isothermal containers that will enable packaging and distribution in a fast and efficient way of foodstuffs with different thermal characteristics.

According to the invention, the above purpose is achieved by a distribution unit presenting the characteristics according to Claim 1. Specifically, the unit according to the invention envisages isothermal containers formed by a base and by a thermally insulating lid and in which the base bears an identification of the thermal characteristics of the foodstuffs introduced into the isothermal containers. In addition, the unit according to the present invention can envisage a system for thermal regulation of hot and cold beverages that is extremely simple and that will not require any circuitry within the distribution unit. In particular, the distribution unit according to the present invention envisages that the base of the isothermal containers is hollow and pre-arranged for containing in hermetic conditions a heating material with slow release of the heat or else a material that can be cooled with slow release of frigories.

Thanks to the characteristics listed above, the distribution unit according to the present invention possesses an optimal configuration for simultaneous management of hot and cold foodstuffs, which enables simultaneous control of the temperature of delivery to the consumers of both of the types of foodstuffs.

Further characteristics and advantages of the invention will emerge clearly in the course of the ensuing detailed description, with reference to the attached plates of drawings, which are provided purely by way of non-limiting example and in which:
- Figure 1 is a perspective view of the unit according to one embodiment of the invention, for collective distribution of isothermal containers;
- Figure 2 is an exploded perspective view of the distribution unit of Figure 1;
- Figures 3-5 are perspective views of different types of isothermal containers of the distribution unit described herein; and
- Figure 6 is a perspective view of a detail of the unit of Figure 1.

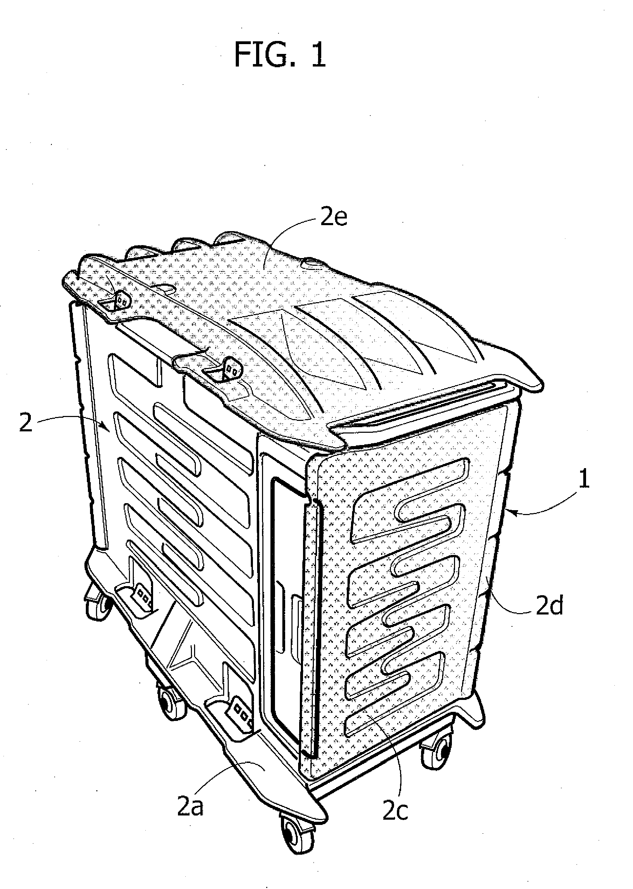

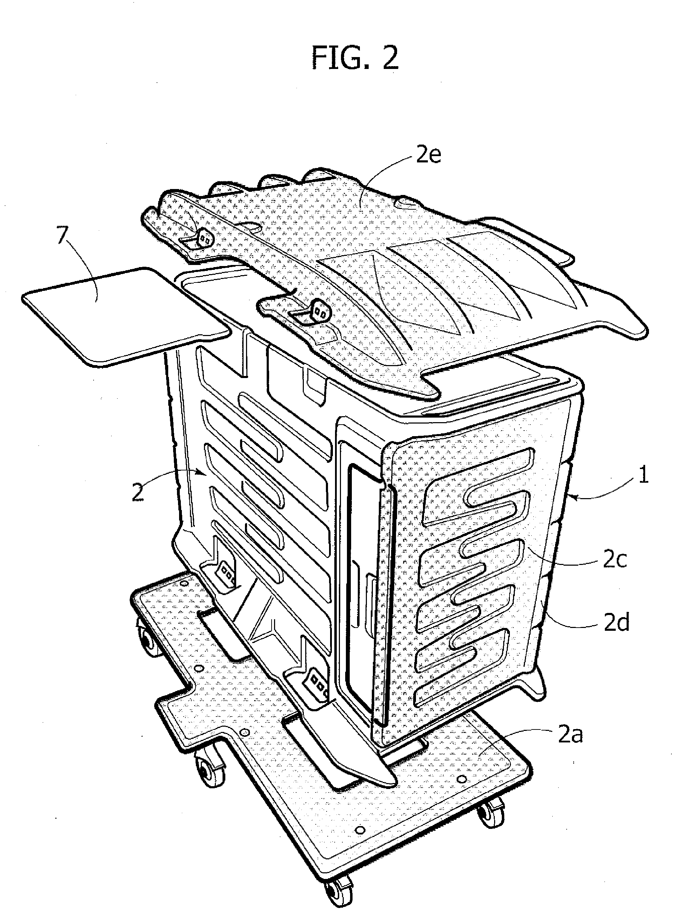

With reference to Figures 1 and 2, designated as a whole by 1 is a trolley constituted by a supporting structure 2 of a generic parallelepipedal shape, which is mounted on a base 2a provided with swivel wheels. The supporting structure 2 presents inside it a series of shelves set on top of one another (not visible in the figure), which can, for example, be constituted by simple pairs of horizontal angular elements. Preferably, the walls of the supporting structure 2 are made of an isothermal material.

The structure of the trolley will not be described in detail, and in particular only the characteristics thereof useful for the purposes of an understanding of the innovative aspects of the invention will be described, the other characteristics and specific features being inferrable from trolleys of a conventional type of the technique in question.

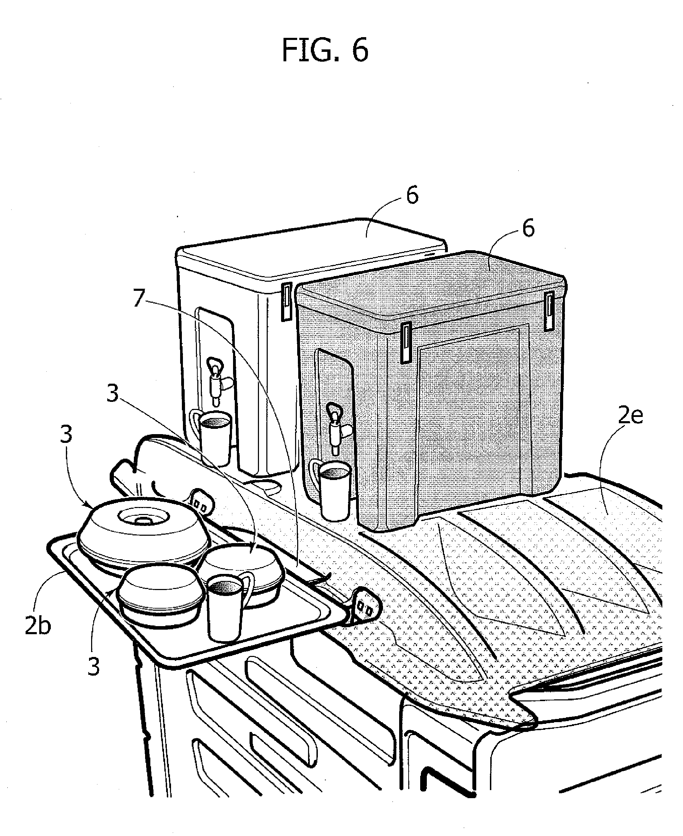

The shelves of the trolley have in particular the function of carrying trays 2b (one of which is visible in Figure 6) available on the shelves themselves and designed to constitute a resting surface for isothermal containers 3, which will be described in detail in what follows.

The trays are preferably made of plastic material and preferably have a width and a length approximately equal to 530 mm and 370 mm, or else to 275 mm and 370 mm, respectively. The trays are positioned on the shelves of the trolley so that they can slide thereon for them to be loaded thereon and unloaded therefrom easily. The trolley described herein can preferably contain up to 24 trays, and has an opening closed by a respective hatch 2c on both of the opposite sides of the supporting structure so as to enable a high flexibility in the operations of introduction and removal of the trays.

The isothermal containers 3 of the distribution unit described herein are formed by a base 4 designed to contain the foodstuffs, and by a bell-shaped lid 5, which can be set on top of the base and is pre-arranged for thermal insulation the foodstuffs in the container from the outside environment. The base and the bell-shaped lid are both formed by a shell made of polyethylene. The shell of the bell-shaped lid is filled inside with polyurethane foam.

As has already been mentioned previously, the distribution unit described herein envisages isothermal containers in which the respective bases bear an identification of the thermal characteristics of the foodstuff for which each isothermal container is designed. In a preferred embodiment, the identification is constituted by the colouring of the bases of the containers.

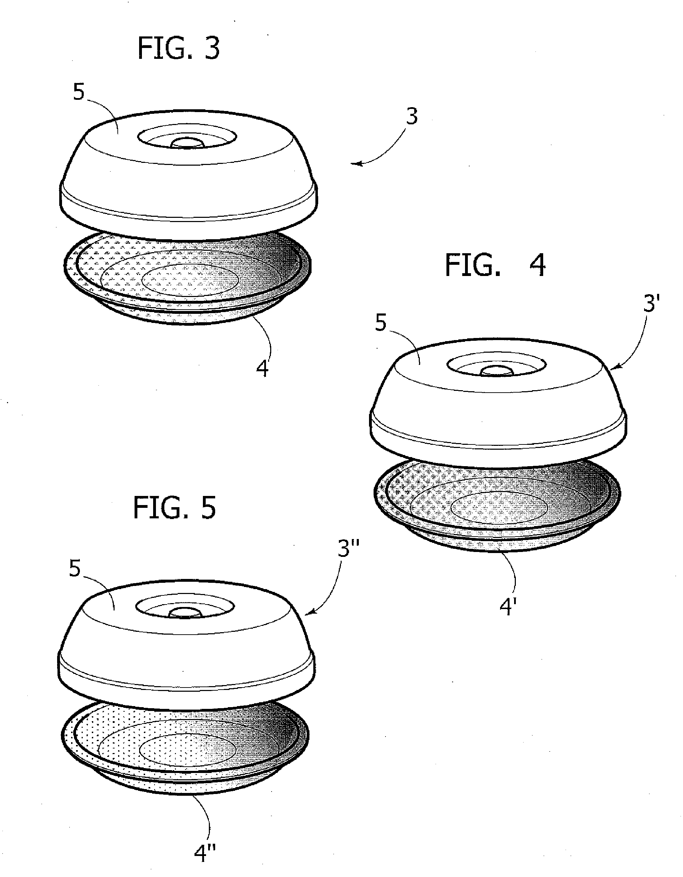

Figures 3-5 represent isothermal containers designed for respective types of foodstuffs with a specific thermal characteristic. The container of Figure 3 is designed to receive hot foodstuffs. In this case, the base 4 is of an apricot colour, preferably Pantone 1355u. In addition, the shell of the base of the container of Figure 3 is filled with wax. Before using the isothermal container of Figure 3, the base 4 is immersed for a certain period in a hot-water bath, or else is put in an oven, for the wax to melt. In this way, the thermal energy stored in the molten wax provided inside the shell of the base 4 is transmitted within the container and thus enables the temperature of the hot foodstuffs, which have been introduced into the base, to be kept substantially constant, eliminating the effects of the minor losses of heat through the isothermal lid 5.

Figure 4 represents, instead, an isothermal container 3' designed to receive cold foodstuffs. In this case, the base 4' of the container is of a sky-blue colour, preferably Pantone 291u. In addition, the shell of the base of the container is filled with a eutectic liquid. Before introducing the foodstuffs into the base 4', this is put in a refrigerating device in order to freeze the eutectic liquid. The eutectic liquid frozen in the shell of the base 4' ensures that the temperature of the foods in the container 3' will be kept substantially constant.

The distribution unit described herein also envisages an isothermal container 3", represented in Figure 5, designed to receive foodstuffs so that it is not necessary for a constant temperature to be maintained inside the container. This type of isothermal containers is made with a grey colour, preferably Pantone cool grey 1u, and the shell of the base 4" is filled with polyurethane foam.

The bases 4, 4' and 4" of the containers shown in Figures 3 to 5 have the respective colourings, for identification of the type of foods for which they are designed, over their entire surface, but it is, however, possible to provide said colourings only on a portion visible from the outside of said surface.

In addition, the identification of the thermal characteristics of the foodstuff for which the isothermal container is designed can be obtained in ways that differ from what has been illustrated herein up to now, such as, for example, by providing on the bases symbols, wordings, or else, surface patterns, which vary according to the thermal characteristics of the foodstuffs that have to be introduced into the bases.

The provision of the identifications of the thermal characteristics of the foodstuffs on the base of the isothermal containers is well suited to the thermal-regulation system further envisaged in the unit for distribution of meals as described above, in so far as the identification provided on the base of the containers, in addition to identifying the foodstuffs contained within a specific container, also enables the bases of the containers to be handled easily when they are prepared for performing the thermal regulation of the foods. In fact, the bases of the containers, thanks to the aforementioned identifications that they bear, are immediately recognizable in regard to their destination to a specific type of food, and can be, hence, destined, without any risk of error, to the operations of preparation envisaged therefore, which consist, for example, according to the type of foods for which the bases are designed, in immersion in the hot-water bath or else in introduction in a refrigerating device, as described previously.

The present applicant has, moreover, found that the aforementioned apricot colour Pantone 1355u gives a sensation of wellbeing, which favours optimism and stimulates appetite. The present applicant has, therefore, envisaged that the meal-distribution unit described herein shall be provided with a trolley presenting portions visible from the outside of the aforesaid apricot colour. In particular, for the trolley illustrated in Figures 1 and 2, made of the aforesaid apricot colour Pantone 1355u are a top covering panel 2e for the supporting structure, the front and rear walls 2d, and the supporting base 2a on which the swivel wheels are mounted. The unit for distribution of meals described herein is then particularly suitable for uses in hospitals.

Finally, as may be seen in Figure 6, the covering panel 2e of the trolley of the meal-distribution unit described herein envisages plane portions designed to receive dispensers of beverages 6 at a controlled temperature. In a region corresponding to said portions a resting surface 7 for the trays 2b is, moreover, provided in order to enable the person responsible for the distribution of the meals to rest temporarily the trays on the aforesaid resting surface and serve the beverages contained in the dispensers in glasses or cups, which are then arranged on the trays together with the isothermal containers, and which form part of the meal that is served with the distribution unit described herein.

Of course, the details of construction and the embodiments may vary widely with respect to what is described and illustrated herein, without thereby departing from the scope of the present invention, as defined in the ensuing claims.

## Claims

1. A unit for the distribution of thermally regulated meals, particularly in a hospital setting, comprising a trolley (1) provided with shelves for supporting trays (2b), which are each designed to receive at least one isothermal container (3) comprising a base (4) and an isothermal lid (5) that can be set on top of said base (4), in which the base (4) bears an identification of the thermal characteristics of the foodstuff introduced into the isothermal container (3).

2. The unit according to Claim 1, **characterized in that** the identification is the colouring of the base.

3. The unit according to Claim 2, **characterized in that** said colouring is apricot and said isothermal container is pre-arranged for receiving a hot foodstuff.

4. The unit according to Claim 2 or Claim 3, **characterized in that** said colouring corresponds to Pantone 1355u.

5. The unit according to Claim 1, **characterized in that** said base (4) is hollow and hermetically contains a heating material with slow release of heat.

6. The unit according to Claim 5, **characterized in that** said material is wax, which is molten prior to the use of the isothermal container.

7. The unit according to Claim 2, **characterized in that** said trays are designed to receive a second isothermal container (3') for cool foodstuffs formed by a base (4') and by an isothermal lid (5), in which the colouring of the base is sky blue.

8. The unit according to Claim 7, **characterized in that** said colouring corresponds to Pantone 291u.

9. The unit according to Claim 7, **characterized in that** said base (4') of said second container (3') is hollow and contains in hermetic conditions a material that can be cooled with slow release of frigories.

10. The unit according to Claim 9, **characterized in that** said material is eutectic liquid that can be frozen prior to the use of the isothermal container.

11. The unit according to Claim 2, **characterized in that** said trays are designed to receive a third isothermal container (3") for cool foodstuffs formed by a base (4") and by an isothermal lid (5), in which the colouring of the base is grey.

12. The unit according to Claim 11, **characterized in that** said colouring corresponds to Pantone cool grey 1u.

13. The unit according to Claim 3 or Claim 4, **characterized in that** the trays (2b) are coloured like the base of said at least one isothermal container.

14. The unit according to Claim 3 or Claim 4, **characterized in that** the trolley (1) is at least in part coloured like the base of said at least one isothermal container (3).

15. The unit according to Claim 1, **characterized in that** the trolley is equipped with a dispenser for beverages (6) at a controlled temperature, and with a resting surface (7) for the trays in a position corresponding to said dispenser of beverages.

16. The unit according to Claim 1, **characterized in that** said trolley is provided with supporting sliding guides in a number such as to be able to receive from 12 to 24 trays that inside the trolley are set on top of one another and that are accessible via a double side opening (2c) of said trolley.

17. The unit according to Claim 1, **characterized in that** said trolley is made of an isothermal material.
